(19) Europäisches Patentamt
European Patent Office
Office européen des brevets

(11) **EP 3 945 452 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **20188013.5**

(22) Anmeldetag: **27.07.2020**

(51) Internationale Patentklassifikation (IPC):
**G06V 10/80** (2022.01)

(52) Gemeinsame Patentklassifikation (CPC):
**G06V 20/56; G06F 18/2185; G06V 10/80**

(54) **VERFAHREN ZUM OPTIMIEREN VON SENSORPARAMETERN**

METHOD FOR OPTIMISING SENSOR PARAMETERS

PROCÉDÉ D'OPTIMISATION DES PARAMÈTRES DU CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.02.2022 Patentblatt 2022/05**

(73) Patentinhaber: **Deutsche Telekom AG**
**53113 Bonn (DE)**

(72) Erfinder: **PINSKER, Florian**
**1239 Wien (AT)**

(74) Vertreter: **RDL Patentanwälte PartG mbB**
**Senefelderstrasse 26**
**70176 Stuttgart (DE)**

(56) Entgegenhaltungen:
**DE-A1- 102018 126 112**

**Beschreibung**

Die vorliegende Erfindung betrifft ein Verfahren und ein System zum Optimieren von Sensorparametern von zwei Sensoren, die insbesondere bei der Objekterkennung verwendet werden.

Sensoren werden in der Regel mit Parametern bzw. Sensorparametern versehen, die fest eingestellt werden oder nach einem deterministischen Schema ablaufen. Eine Software zur Interpretation von den jeweiligen Sensoren erfassten Daten ist derzeit nicht zufriedenstellend mit dem ,Verhalten' bzw. den Aktionen des jeweiligen Sensors gekoppelt, d.h. es erfolgt keine Rückmeldung inwieweit an den jeweiligen Sensoren eingestellte Sensorparameter Einfluss auf die von den jeweiligen Sensoren erfassten Daten haben. Das bedeutet, dass eine Lernfähigkeit moderner Sensoren zumindest eingeschränkt, in der Regel aber gar nicht gegeben ist. Dadurch ist insbesondere die Objekterkennung durch Sensoren mittels aus dem Stand der Technik bekannter Verfahren nach wie vor beschränkt.

DE 10 2018 126 112 A1 beschreibt ein Trainingsverfahren für ein neuronales Netz für eine automatische Einstellung einer Kamera, wobei das neuronale Netz mindestens einen Kameraeinstellungsparameter ausgibt. Dabei wird zunächst ein Bild mittels der Kamera aufgenommen und Bilddaten des aufgenommenen Bildes als Eingangsdaten für das neuronale Netz bereitgestellt und analysiert, mit dem Ziel mindestens ein Objekt in dem Bild zu erkennen. Ferner wird zumindest ein Teil des neuronalen Netzes in Abhängigkeit davon, ob mindestens ein Objekt erkannt wurde, beeinflusst.

Bei, wie voranstehend beschrieben, festgelegten Sensorparametern wird nicht das volle Potential der zur Objekterkennung genutzten Algorithmen ausgenutzt. So kann beispielsweise ein Deep Learning Algorithmus zwar einen gewissen ,score' bzw. ein Ergebnis mit einem gewissen Übereinstimmungswert durch Training erreichen, jedoch gerade in einer Betriebsphase können bei Verdeckungen oder ungünstigen Sensorparametern manche Objekte durch den Deep Learning Algorithmus dennoch nicht optimal interpretiert werden.

Es gibt Bereiche, wie den Automobilsektor, die eine äußerst genaue Messung bzw. Objekterkennung erfordern. Derzeit erreichen Deep Learning Algorithmen aufgrund der voranstehend genannten Problematik selten diese Anforderungen. Die Aktionen eines jeweiligen Sensors sind nicht effizient mit der Interpretation durch die zur Objekterkennung verwendeten Algorithmen gekoppelt.

Es war demnach eine Aufgabe der vorliegenden Erfindung, eine Möglichkeit vorzusehen, Sensorparameter eines jeweiligen Sensors, der bei einer Objekterkennung verwendet wird, so anzupassen, dass einer zur Objekterkennung zur Anwendung kommender Objekterkennungsalgorithmus in einer gegebenen Situation optimale Ergebnisse liefert.

Zur Lösung der voranstehend genannten Aufgabe wird ein Verfahren und ein System mit den jeweiligen Merkmalen der unabhängigen Ansprüche bereitgestellt. Weitere Ausgestaltungen sind den abhängigen Ansprüchen, der Beschreibung und den Figuren zu entnehmen.

Gemäß Patentanspruch 1 wird ein Verfahren zum Anpassen von einzustellenden Sensorparametern von zwei Sensoren bei Verwendung der zwei Sensoren in funktionsfähiger Verbindung mit einem Objekterkennungsalgorithmus bei einer Objekterkennung in einem gegebenen Szenario bereitgestellt, wobei die Sensoren ausgewählt sind aus der Gruppe, die umfasst: Kamera LiDAR-Sensor, Radar-Sensor, Ultraschall-Sensor, Infrarot-Sensor, Sonar-Sensor. Das erfindungsgemäße Verfahren zeichnet sich dadurch aus, dass

a. die einzustellenden Sensorparameter an den zwei Sensoren eingestellt werden,

b. die zwei Sensoren mit den eingestellten Sensorparametern aktiviert werden, und die zwei Sensoren Daten sensorisch erfassen und als sensorisch erfasste Daten dem Objekterkennungsalgorithmus bereitstellen,

c. der Objekterkennungsalgorithmus ein Ergebnis, umfassend mindestens ein erkanntes Objekt mit einem dem erkannten Objekt zugewiesenen Übereinstimmungswert, ermittelt und einem maschinellen Lernalgorithmus, der als Reinforcement Learning Agent realisiert wird, bereitstellt,

d. der maschinelle Lernalgorithmus, dem das Ergebnis (21) und die eingestellten Sensorparameter (15), die zur Erfassung der aktuell sensorisch erfassten Daten (12) an den zwei Sensoren (11) eingestellt sind, bereitgestellt werden, die jeweiligen Sensorparameter der zwei Sensoren innerhalb eines jeweiligen Sensorparameterbereichs variiert und die jeweiligen variierten Sensorparamater als einzustellende Sensorparameter für die zwei Sensoren bereitstellt,

e. die Schritte a. bis d. iterativ wiederholt werden bis der jeweilige dem mindestens einen erkannten Objekt zugewiesene Übereinstimmungswert innerhalb mindestens eines der jeweiligen Sensorparameterbereiche ein Maximum einnimmt.

Durch das Anpassen der jeweiligen Sensorparameter der bei der Objekterkennung verwendeten Sensoren an eine jeweilige Situation bzw. ein jeweiliges Szenario kann es dem mit dem bzw. mit den verwendeten Sensoren in funktionsfähiger Verbindung stehenden Objekterkennungsalgorithmus, bspw. dem Deep Learning Algorithmus erleichtert werden, sein volles Potential auszuschöpfen.

Unter einer funktionsfähigen bzw. funktionalen bzw. kommunikativen Verbindung ist im Rahmen der vorliegenden Offenbarung eine Verbindung zu verstehen, die es ermöglicht, dass Daten zwischen den miteinander verbundenen Komponenten, hier dem Objekterkennungsalgorithmus und den zwei Sensoren, übertragen bzw. ausgetauscht werden. Von den Sensoren erfasste Daten, die an den Objekterkennungsalgorithmus über die funktionsfähige Verbindung übermittelt werden, ermöglichen es dem Objekterkennungsalgorithmus, anhand der Daten ein sich in dem Szenario befindliches Objekt zu erkennen. Der Objekterkennungsalgorithmus steht ferner in kommunikativer Verbindung mit dem maschinellen Lernalgorithmus, um darüber dem maschinellen Lernalgorithmus das Ergebnis bereitzustellen. Die von dem maschinellen Lernalgorithmus auf Basis des Ergebnisses berechneten neu einzustellenden Sensorparameter werden in möglicher Ausgestaltung dem mindestens einen Sensor direkt über eine dafür vorgesehene Schnittstelle bereitgestellt, und in weiterer Ausgestaltung automatisch an dem mindestens einen Sensor eingestellt. Die Formulierungen "funktionsfähige Verbindung", "funktionale Verbindung" und "kommunikative Verbindung" werden im Rahmen der vorliegenden Offenbarung synonym verwendet.

Die zwei Sensoren, der Objekterkennungsalgorithmus und der maschinelle Lernalgorithmus sind über entsprechende kommunikative Verbindungen miteinander vernetzt, d. h. sie stehen miteinander in Kommunikation. Jede der kommunikativen Verbindungen zwischen den verschiedenen Komponenten kann eine direkte Verbindung bzw. eine indirekte Verbindung sein. Jede kommunikative Verbindung kann eine drahtgebundene oder eine drahtlose Verbindung sein. Jede geeignete Kommunikationstechnologie kann verwendet werden. Jede Komponente, d.h. die zwei Sensoren, der Objekterkennungsalgorithmus bzw. die diesen implementierende und/oder ausführende Computereinheit und der maschinelle Lernalgorithmus bzw. die diesen implementierende und/oder ausführende Computereinheit umfassen eine oder mehrere Schnittstellen für die Kommunikation untereinander. Eine solche Kommunikation kann unter Verwendung eines drahtgebundenen Datenübertragungsprotokolls wie Fiber Distributed Data Interface (FDDI), Digital Subscriber Line (DSL), Ethernet, Asynchronous Transfer Mode (ATM) oder eines anderen drahtgebundenen Übertragungsprotokolls durchgeführt werden. Alternativ kann die Kommunikation auch drahtlos über drahtlose Kommunikationsnetzwerke unter Verwendung eines beliebigen einer Vielzahl von Protokollen erfolgen, wie z.B. General Packet Radio Service (GPRS), Universal Mobile Telecommunications System (UMTS), Code Division Multiple Access (CDMA), Long Term Evolution (LTE), Wireless Universal Serial Bus (USB) und/oder jedes anderen drahtlosen Protokolls. Die jeweilige Kommunikation kann eine Kombination aus einer drahtlosen und einer drahtgebundenen Kommunikation sein.

Die jeweilige Computer- bzw. Recheneinheit kann ein oder mehrere Eingabegeräte umfassen oder mit einem oder mehreren Eingabegeräten kommunizieren, wie z.B. einem Touchscreen, einer Audioeingabe, einer Bewegungseingabe, einer Maus, einer Tastatureingabe und/oder ähnlichem. Ferner kann die jeweilige Computer- bzw. Recheneinheit ein oder mehrere Ausgabegeräte umfassen oder mit einem oder mehreren Ausgabegeräten in Verbindung stehen, wie z.B. einem Audioausgang, einem Videoausgang, einem Bildschirm/Anzeigenausgang und/oder ähnlichem.

Die Anpassung der jeweiligen Sensorparameter erfolgt mittels Reinforcement Learning, d.h. mittels eines bestärkend lernenden Agenten. Das heißt, dass der maschinelle Lernalgorithmus durch einen bestärkend lernenden Agenten, einen Reinforcement Learning Agenten, realisiert wird, wobei der Agent selbständig eine Strategie erlernt, um den jeweiligen dem mindestens einen erkannten Objekt zugewiesenen Übereinstimmungswert in der vorgegebenen Situation bzw. in dem vorgegebenen Szenario zu maximieren. Der Vorteil des Reinforcement Learnings liegt unter anderem darin, dass vorab keine Trainingsdaten benötigt werden. Stattdessen werden diese in vielen Durchläufen in einem Trial-and-Error-Verfahren während einer Trainingsphase generiert und gelabelt, d.h. gekennzeichnet. Dabei werden Kausalitäten beobachtet und zum Erlernen der Strategie genutzt. Der Agent lernt demnach durch verschiedene Versuche, welche Parameter des Sensors dem Objekterkennungsalgorithmus, wie bspw. einem Deep Learning Algorithmus gute Ergebnisse verschaffen, indem das jeweilige Ergebnis bzw. der davon umfasste Übereinstimmungswert aus dem Objekterkennungsalgorithmus dem maschinellen Lernalgorithmus gemeldet wird. Hierdurch kann eine Erhöhung des Übereinstimmungswerts im Rahmen gegebener Sensorparameterbereiche erreicht werden.

Anstelle eines Reinforcement Learning Agenten für die Optimierung der einzustellenden Sensorparameter kann auch eine andere Lernende Methode genutzt werden.

Erfindungsgemäß werden die zwei Sensoren ausgewählt aus der Gruppe, die mindestens umfasst: Kamera, LiDAR-Sensor, Radar-Sensor, Ultraschall-Sensor, Infrarot-Sensor, Sonar-Sensor. Es ist auch denkbar, mehrere Sensoren in Kombination bei der Objekterkennung zu verwenden, d.h. die jeweils von den jeweiligen Sensoren erfassten Daten werden von dem Objekterkennungsalgorithmus zur Ermittlung des Ergebnisses fusioniert und verarbeitet. Dabei können die Sensoren gleichen oder unterschiedlichen Typs sein. Es ist auch denkbar, dass mehrere Sensoren gleichen oder unterschiedlichen Typs, d.h. bspw. ein LiDAR-Sensor und eine Kamera, in einem Gehäuse zu einer technischen Einheit miteinander verbaut sind.

In weiterer Ausgestaltung werden die einzustellenden Sensorparameter, wenn einer der Sensoren eine Kamera ist, für die Kamera aus einer Gruppe von variierbaren Kameraparametern, insbesondere umfassend Kameraposition, Blendenöffnung, Beleuchtungswinkel, Scharfeinstellung, Aufnahmewinkel, Anzahl von Pixeln in einer Pixelwolke, Aufnahmefrequenz, ausgewählt und/oder, wenn einer der Sensoren ein LiDAR-Sensor ist, für den LiDAR-Sensor aus einer Gruppe von variierbaren LiDAR-Parametern ausgewählt.

Es ist beispielsweise auch denkbar, dass mindestens zwei Sensoren verwendet werden und das von dem Objekterkennungsalgorithmus ermittelte Ergebnis ferner einen bezogen auf die mindestens zwei Sensoren bestimmten Überlappungswert umfasst.

In weiterer Ausgestaltung des erfindungsgemäßen Verfahrens steht der Objekterkennungsalgorithmus mit einer Bewertungsfunktion (Scoring Function) in funktionaler Verbindung, insbesondere umfasst der Objekterkennungsalgorithmus die Bewertungsfunktion, wobei die Bewertungsfunktion dazu ausgebildet ist, den jeweiligen dem mindestens einen erkannten Objekt zugewiesenen Übereinstimmungswert zu bestimmen. Der Übereinstimmungswert entspricht einem Qualitätsmaß, das angibt, wie gut das mindestens eine erkannte Objekt von dem Objekterkennungsalgorithmus tatsächlich korrekt erkannt wird, d.h. inwieweit ein von dem Objekterkennungsalgorithmus vorhergesagtes bzw. erkanntes Objekt gemäß einem Ground Truth bzw. einer Referenz tatsächlich dem realen Objekt entspricht. So bedeutet bspw. ein maximal erreichbarer Übereinstimmungswert, ausgedrückt bspw. in % entsprechend 100%, einer Kategorie "Auto", dass das aus Sicht des Objekterkennungsalgorithmus erkannte Objekt ein Auto ist und gemäß einem Ground Truth auch tatsächlich ein Auto ist.

Der Übereinstimmungswert kann bspw. als Overlap und/oder als Konfidenz dargestellt bzw. beschrieben sein bzw. werden. Unter Overlap ist dabei eine Überlappung zwischen einem Referenzwert bzw. einem Ground Truth und einer Vorhersage, d.h. einem erkannten Objekt des Objekterkennungsalgorithmus zu verstehen. Unter Konfidenz ist ein Maß der Sicherheit einer Kategorisierung zu verstehen. So bedeutet bspw. eine 100% Konfidenz der Kategorie "Auto", dass das durch den Objekterkennungsalgorithmus erkannte Objekt ein Auto ist und gemäß eines Ground Truth auch tatsächlich ein Auto ist.

Ist der Sensor bspw. eine Kamera, so ist denkbar, dass die Kamera ein Auto filmt und der die aufgenommenen Kamerabilder, d.h. die Sensordaten verarbeitende Objekterkennungsalgorithmus eine Konfidenz anzeigt, deren Wert davon abhängt, in welcher Position sich die Kamera befindet. Der die Sensorparameter optimierende maschinelle Lernalgorithmus stellt dann ggf., d.h. je nach Übereinstimmungswert, der ihm von den Objekterkennungsalgorithmus bereitgestellt wird, innerhalb der jeweiligen Sensorparameterbereiche angepasste Sensorparameter bereit, die die Position der Kamera verbessern, d.h. eine größere Konfidenz bewirken. Ein jeweiliger Sensorparameterbereich gibt einen physikalischen Wertebereich an, innerhalb dessen die jeweiligen Sensorparameter, die an dem Sensor eingestellt werden können, liegen müssen. Das bedeutet, ein jeweiliger Sensorparameterbereich umfasst für einen jeweiligen Sensorparameter alle überhaupt realisierbaren, d.h. an dem Sensor einstellbaren Werte.

Gemäß einer Ausgestaltung wird das erfindungsgemäße Verfahren bzw. die davon umfassten Schritte a. bis d. durch eine Anzahl i von, insbesondere durch eine Mehrzahl von, ineinander verschachtelten Funktionen $f^{(i)}$, die eine entsprechende Anzahl *i* von Verschachtelungsschalen bilden, wobei *i* eine natürliche Zahl ist, realisiert, wobei die eingestellten Sensorparameter des mindestens einen Sensors $K$, $R$ und die jeweilig mit dem mindestens einen Sensor mit den eingestellten Sensorparametern sensorisch erfassten Daten von einer innersten Funktion $f^{(1)}(x, K, R)$ der verschachtelten Funktionen bereitgestellt werden, dann von einer die innerste der verschachtelten Funktionen direkt umhüllenden und den Objekterkennungsalgorithmus ausführenden Funktion $f^{(2)}(y, K, R)$ der verschachtelten Funktionen weiterverarbeitet werden, dann von einer die den Objekterkennungsalgorithmus ausführende Funktion direkt umhüllenden und die Bewertungsfunktion ausführenden Funktion $f^{(3)}(z, K, R)$ der verschachtelten Funktionen weiterverarbeitet werden, dann von einer die die Bewertungsfunktion ausführende Funktion direkt umhüllenden und den maschinellen Lernalgorithmus ausführenden Funktion $f^{(4)}(v, K, R)$ der verschachtelten Funktionen weiterverarbeitet werden, und die einzustellenden Sensorparameter durch eine äußerste Funktion $f^{(5)}(w, K, R)$ der verschachtelten Funktionen ausgegeben werden, wobei v, w, x, y, z jeweiligen Funktionsvariablen darstellen. Durch die Verschachtelung lässt sich das Verfahren bzw. die davon umfassten Schritte a. bis d. durch eine Funktion *f* für beispielsweise zwei Sensoren $K$, $R$ wie folgt darstellen:

$$f(K,R) = f^{(5)}\big(f^{(4)}\big(f^{(3)}\big(f^{(2)}\big(f^{(1)}(K,R),K,R\big),K,R\big)K,R\big)K,R\big)$$

wobei *f(K, R)* letztlich die angepassten einzustellenden Sensorparameter bzw. Werte für die einzustellenden Sensorparameter der jeweiligen Sensoren angibt oder zumindest die einzustellenden Sensorparameter aus *f(K, R)* ableitbar sind bzw. hervorgehen. Mit diesen einzustellenden Sensorparameter werden die Schritte a. bis d. dann erneut durchlaufen. Die Schritte a. bis d. werden so oft wiederholt bzw. *f(K, R)* wird so oft angewandt bis der jeweilige dem mindestens einen erkannten Objekt zugewiesene Übereinstimmungswert innerhalb mindestens eines, vorzugsweise aller, der jeweiligen Sensorparameterbereiche ein Maximum einnimmt.

In weiterer Ausgestaltung des erfindungsgemäßen Verfahrens wird als Objekterkennungsalgorithmus ein Deep Learning Algorithmus verwendet.

Das erfindungsgemäße Verfahren kann in mindestens einem der folgenden Gebiete durchgeführt werden: Automatisierungstechnik, hochautonomes Fahren (HAF), Robotik, mobile Endgeräte, insbesondere mobile Endgeräte einer nächsten Generation.

Ferner betrifft die vorliegende Erfindung ein System, mindestens umfassend ein computerlesbares Medium und zwei Sensoren, wobei die Sensoren ausgewählt sind aus der Gruppe, die mindestens umfasst: Kamera, LiDAR-Sensor, Radar-Sensor, Ultraschall-Sensor, Infrarot-Sensor, Sonar-Sensor, wobei das computerlesbare Medium mit den zwei Sensoren in funktionaler Verbindung steht und ein Computerprogramm mit Programmcodes umfasst, die bei Laden und Ausführen des Computerprogramms auf einer Computereinheit, die in funktionaler Verbindung mit den zwei Sensoren steht, dazu ausgebildet sind,

A. an den zwei Sensoren einzustellende Sensorparameter einzustellen, und die zwei Sensoren mit den eingestellten Sensorparametern zu aktivieren,
B. die mit den zwei Sensoren sensorisch erfassten Daten einem Objekterkennungsalgorithmus bereitzustellen,
C. mit dem Objekterkennungsalgorithmus ein Ergebnis, umfassend mindestens ein erkanntes Objekt mit einem dem erkannten Objekt zugewiesenen Übereinstimmungswert, zu ermitteln und einem maschinellen Lernalgorithmus, der als Reinforcement Learning Agent realisiert ist, bereitzustellen,
D. mit dem maschinellen Lernalgorithmus, dem das Ergebnis und die einzustellenden Sensorparameter, die zur Erfassung der aktuell sensorisch erfassten Daten an den zwei Sensoren eingestellt sind, bereitgestellt werden, die jeweiligen Sensorparameter der zwei Sensoren innerhalb eines jeweiligen Sensorparameterbereichs zu variieren und die jeweiligen variierten Sensorparameter als einzustellende Sensorparameter für die zwei Sensoren bereitzustellen,
E. die Schritte A. bis D. iterativ zu wiederholen bis der jeweilige dem mindestens einen erkannten Objekt zugewiesene Übereinstimmungswert innerhalb mindestens eines der jeweiligen Sensorparameterbereiche ein Maximum einnimmt.

Der maschinelle Lernalgorithmus ist durch einen bestärkend lernenden Agenten, einen Reinforcement Learning Agenten, realisiert, wobei der Agent dazu ausgebildet ist, selbständig eine Strategie zu erlernen, um den jeweiligen dem mindestens einen erkannten Objekt zugewiesenen Übereinstimmungswert zu maximieren.

In weiterer Ausgestaltung des computerlesbares Mediums steht der Objekterkennungsalgorithmus mit einer Bewertungsfunktion, einer Scoring Funktion, in funktionaler Verbindung, insbesondere umfasst der Objekterkennungsalgorithmus die Bewertungsfunktion, wobei die Bewertungsfunktion dazu ausgebildet ist, den jeweiligen dem mindestens einen erkannten Objekt zugewiesenen Übereinstimmungswert zu bestimmen.

In einer weiteren Ausführungsform des computerlesbaren Mediums sind die Programmcodes dazu ausgebildet, mehrere ineinander verschachtelte Funktionen, die eine entsprechende Anzahl von Verschachtelungsschalen bilden, durchzuführen, wobei die eingestellten Sensorparameter des mindestens einen Sensors und die jeweilig mit dem mindestens einen Sensor mit den eingestellten Sensorparametern sensorisch erfassten Daten von einer innersten Funktion der verschachtelten Funktionen bereitgestellt werden, dann von einer die innerste der verschachtelten Funktionen direkt umhüllenden und den Objekterkennungsalgorithmus ausführenden Funktion der verschachtelten Funktionen weiterverarbeitet werden, dann von einer die den Objekterkennungsalgorithmus ausführende Funktion direkt umhüllenden und die Bewertungsfunktion ausführenden Funktion der verschachtelten Funktionen weiterverarbeitet werden, dann von einer die die Bewertungsfunktion ausführende Funktion direkt umhüllenden und den maschinellen Lernalgorithmus ausführenden Funktion der verschachtelten Funktionen weiterverarbeitet werden, und die einzustellenden Sensorparameter durch eine äußerste Funktion der verschachtelten Funktionen ausgegeben werden.

In noch weiterer Ausgestaltung des computerlesbaren Mediums ist der Objekterkennungsalgorithmus ein Deep Learning Algorithmus.

Zu den (gegebenenfalls vorübergehenden oder nicht vorübergehenden) computerlesbaren Medien, die zur Speicherung von Computerprogrammbefehlen und -codes und Daten geeignet sind, gehören alle Formen nichtflüchtiger Speicher, Medien und Speichereinrichtungen, einschließlich beispielsweise Halbleiterspeichereinrichtungen, z.B. löschbare programmierbare Nur-Lese-Speicher (EPROM), elektrisch löschbare programmierbare Nur-Lese-Speicher (EEPROM) und Flash-Speichereinrichtungen; Magnetplatten, z.B. interne Festplatten oder Wechselplatten; magneto-optische Platten; und CD-ROM, DVD+/- R. DVD-RAM und DVD-ROM-Platten. Der Speicher kann verschiedene Objekte oder Daten speichern, einschließlich Caches, Klassen, Frameworks, Anwendungen, Sicherungsdaten, Jobs, Webseiten, Webseitenvorlagen, Datenbanktabellen, Speichereinheiten (Repositories), in denen geschäftliche und/oder dynamische Informationen gespeichert sind, sowie alle anderen geeigneten Informationen einschließlich aller Parameter, Variablen, Algorithmen, Anweisungen, Regeln, Einschränkungen oder Verweise darauf. Darüber hinaus kann der Speicher auch andere geeignete Daten enthalten, wie z.B. Protokolle, Richtlinien, Sicherheits- oder Zugangsdaten, Berichtsdateien und andere. Der Prozessor und der Speicher können durch eine spezielle Logikschaltung ergänzt oder in diese integriert werden.

Eine Programm-Software, eine Software-Anwendung, ein Modul, ein Software-Modul, ein Skript oder ein Programmcode kann in jeder Form von Programmiersprache geschrieben werden, einschließlich kompilierter oder interpretierter Sprachen oder deklarativer oder prozeduraler Sprachen, und sie kann in jeder Form eingesetzt werden, einschließlich als eigenständiges Programm oder als Modul, Komponente, Unterprogramm oder andere Einheit, die sich für die Verwendung in einer Computerumgebung eignet. In einer Verkörperung sind die computerausführbaren Anweisungen der vorliegenden Offenlegung in HTML, TS (TypeScript), und CSS (Cascading Style Sheets) geschrieben.

Ein Computerprogramm kann, muss aber nicht, einer Datei in einem Dateisystem entsprechen. Ein Programm kann in einem Teil einer Datei gespeichert sein, der andere Programme oder Daten enthält, z.B. ein oder mehrere Skripte, die in einem Markup Language-Dokument gespeichert sind, in einer einzigen Datei, die dem betreffenden Programm gewidmet ist, oder in mehreren koordinierten Dateien, z.B. Dateien, die ein oder mehrere Module, Unterprogramme oder Codeteile speichern. Ein Computerprogramm kann so eingesetzt werden, dass es auf einem Computer oder auf mehreren Computern ausgeführt werden kann, die sich an einem Standort befinden oder über mehrere Standorte verteilt und durch ein Kommunikationsnetz miteinander verbunden sind. Im Rahmen der vorliegenden Offenbarung meint eine Computereinheit sowohl nur einen Computer als auch mehrere Computer, die durch ein Kommunikationsnetz miteinander verbunden sind. Ein Computerprogramm kann eine Reihe von Untermodulen, Dienstleistungen von Drittanbietern, Komponenten, Bibliotheken und dergleichen enthalten, je nach Bedarf. Umgekehrt können die Merkmale und Funktionen verschiedener Komponenten gegebenenfalls zu einzelnen Komponenten kombiniert werden.

Ein technisches Gebiet der Erfindung ist jenes der Automatisierungstechnik. Weitere Anwendungen finden sich im Bereich des hochautonomen Fahrens (HAF) oder der Robotik. Ein weiterer Anwendungsbereich von Applikationen betrifft mobile Endgeräte, insbesondere mobile Endgeräte der nächsten Generation.

Ferner betrifft die vorliegende Erfindung ein System umfassend das voranstehend beschriebene computerlesbare Medium und zwei Sensoren, wobei das computerlesbare Medium mit den zwei Sensoren in funktionaler Verbindung steht bzw. in funktionale Verbindung bringbar ist, um ein voranstehend beschriebenes Verfahren zum Anpassen von einzustellenden Sensorparametern von zwei Sensoren bei Verwendung der zwei Sensoren bei einer Objekterkennung auszuführen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figur 1 zeigt ein Blockdiagramm zur schematischen Darstellung einer Ausführungsform des erfindungsgemäßen Verfahrens.

Figur 2 illustriert in einer schematischen Darstellung eine weitere Ausführungsform des erfindungsgemäßen Verfahrens.

Figur 3 stellt in schematischer Darstellung von Sensoren erfasste Daten und deren Auswertung nach Verarbeitung von einem Objekterkennungsalgorithmus gemäß einer anderen Ausführungsform des erfindungsgemäßen Verfahrens dar.

Figur 4 zeigt in schematischer Darstellung mögliche Sensorparameter von bei der Objekterkennung verwendbarer Sensoren.

Figur 5 zeigt ein Blockdiagramm zur Illustration einer weiteren Ausführungsform des erfindungsgemäßen Verfahrens.

Die Figuren werden figurenübergreifend beschrieben, gleichen Bezugszeichen sind gleiche Komponenten zugeordnet.

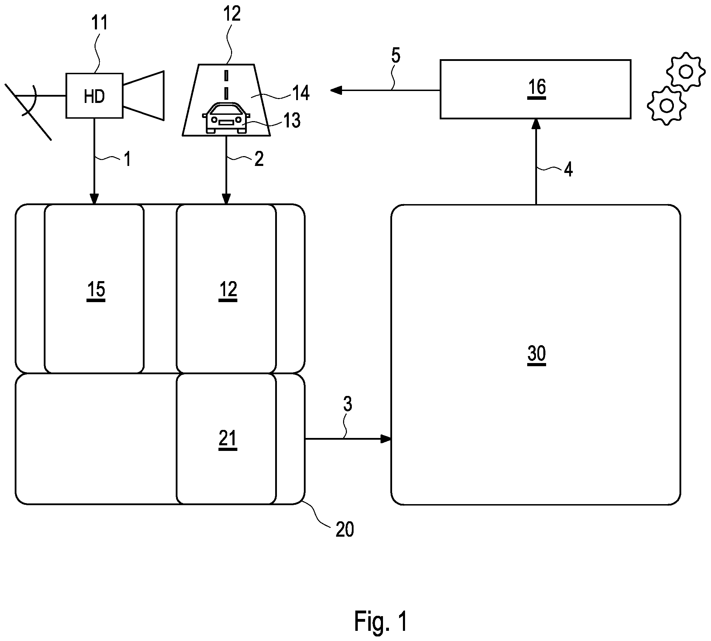

Figur 1 zeigt ein Blockdiagramm zur schematischen Darstellung einer Ausführungsform des erfindungsgemäßen Verfahrens. Mit einem Sensor, bspw. einer hier gezeigten HD-Kamera 11 wird ein Bild oder ein Videostream 12 aufgenommen, wobei das Bild bzw. der Videostream 12 hier einen Straßenabschnitt und ein darauf sich befindendes Kraftfahrzeug, hier einen PkW 13 zeigt. Die HD-Kamera 11 wird hier zur Objekterkennung in einem gegebenen Szenario, d.h. zur Erkennung eines oder mehrerer Objekte 13, hier insbesondere des PkWs 13 auf dem Straßenabschnitt 14, verwendet und ist dazu in funktionsfähiger Verbindung mit einem Objekterkennungsalgorithmus 20. Zu Beginn und um den Sensor bzw. die HD-Kamera 11 zu betreiben, werden nun zunächst einzustellende Sensorparameter an der HD-Kamera 11 eingestellt. Dann wird der Sensor 11 bzw. die HD-Kamera 11 mit den eingestellten Sensorparametern 15 aktiviert, wodurch die HD-Kamera 11 Daten sensorisch erfasst, bspw. in Form des Bildes oder des Videostreams 12. Alternativ oder zusätzlich zu der hier gezeigten und beschriebenen HD-Kamera kann auch jeder andere zur Objekterkennung geeignete Sensor, wie bspw. ein LiDAR-Sensor, ein Radar-Sensor, ein Ultraschall-Sensor oder ein Infrarot-Sensor verwendet werden. Entsprechend variieren die einzustellenden Sensorparameter. Von dem Sensor 11, hier der HD-Kamera 11 werden demnach zum einen, wie durch Pfeil 1 angedeutet, an dem Sensor 11 eingestellte Sensorparameter 15, wie Beleuchtungswinkel, Scharfeinstellung, Belichtungszeit, etc., und zum anderen, wie durch Pfeil 2 angedeutet, sensorisch erfasste Daten 12 bereitgestellt. Die sensorisch erfassten Daten 12 werden dem Objekterkennungsalgorithmus 20 zur Auswertung bereitgestellt bzw. übermittelt. Der Objekterkennungsalgorithmus 20 ermittelt ein Ergebnis 21, umfassend mindestens ein erkanntes Objekt mit mindestens einem dem erkannten Objekt zugewiesenen Übereinstimmungswert. Das Ergebnis 21 bzw. zumindest der davon mindestens eine umfasste Übereinstimmungswert, wie bspw. ein Overlap und/oder eine Konfidenz, wird, wie durch Pfeil 3 angedeutet, einem maschinellen Lernalgorithmus 30 bereitstellt. Ferner werden dem maschinellen Lernalgorithmus 30 die eingestellten Sensorparameter 15, die zur Erfassung der aktuell sensorisch erfassten Daten 12 an dem Sensor 11 eingestellt sind, übermittelt. Der maschinelle Lernalgorithmus 30 variiert in Kenntnis des mindestens einen erfassten Übereinstimmungswertes nun die jeweiligen Sensorparameter des Sensors 11 innerhalb eines jeweiligen Sensorparameterbereichs und stellt, wie durch Pfeil 4 angedeutet, die variierten Sensorparamater als einzustellende Sensorparameter 16 für den Sensor 11 bereit. Nun wird der Sensor 11 neu eingestellt, nämlich, wie durch Pfeil 5 angedeutet, mit den von dem maschinellen Lernalgorithmus 30 variierten Sensorparametern und der Vorgang wird iterativ wiederholt bis der jeweilige dem mindestens einen erkannten Objekt 13, hier bspw. der dem PkW 13, zugewiesene Übereinstimmungswert innerhalb mindestens eines der jeweiligen Sensorparameterbereiche, vorzugsweise innerhalb jedes der jeweiligen Sensorparameterbereiche der Sensorparameter, ein Maximum einnimmt. Da es in der Regel eine Mehrzahl von Sensorparametern gibt, wäre es am besten, wenn jeder der Sensorparameter aus seinem jeweiligen Sensorparameterbereich so eingestellt wäre, dass bei Einstellung all dieser Sensorparameter am Sensor, der Übereinstimmungswert am größten und damit im Rahmen der Sensorparameterbereiche aller einzustellenden Sensorparameter optimal ist.

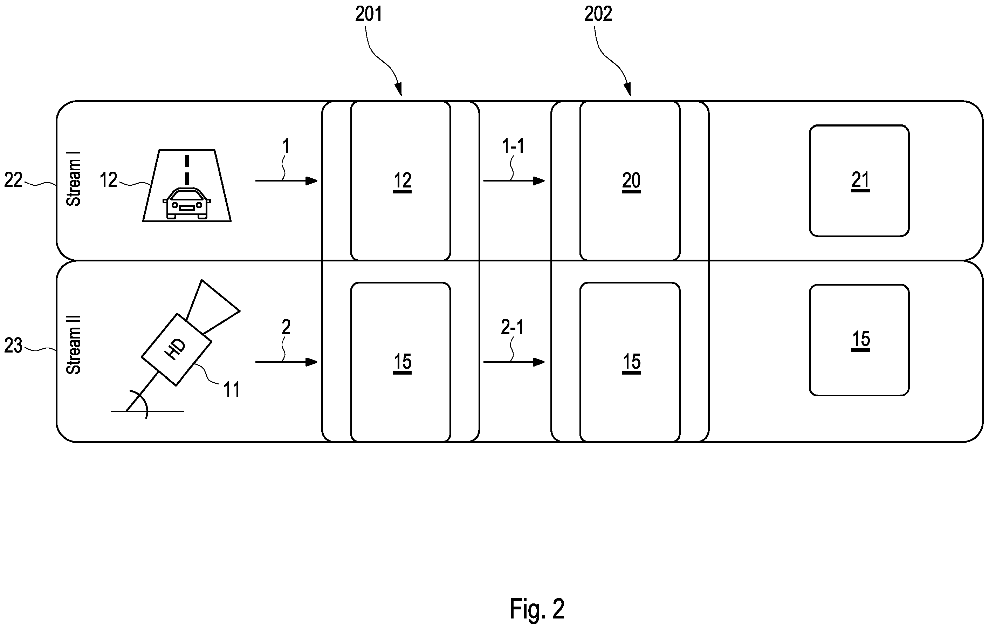

Figur 2 illustriert in einer schematischen Darstellung eine weitere Ausführungsform des erfindungsgemäßen Verfahrens. Hierbei wird aufgezeigt, welche Daten, hier in Form eines "Stream I" 22 und eines "Stream II" 23, dem maschinellen Lernalgorithmus 30 zur Variation bzw. zur Anpassung von einzustellenden Sensorparameter an einem bei einer Objekterkennung zu verwendenden Sensor bereitgestellt werden. In Stream I 22 werden, wie durch Pfeil 1 angedeutet, die von dem Sensor 11 erfassten Daten 12 als "Rohdaten" ("raw data") 12 in einem Schritt 201 bereitgestellt. Dabei kann es sich, im Fall, dass der Sensor eine Bilderfassungseinheit, insbesondere eine Kamera ist, um ein Bild oder eine Abfolge von Bildern, bspw. einen Videostream, oder im Fall, dass der Sensor ein LiDAR-Sensor ist, um einen LiDAR-Stream handeln. Auch andere Arten von Sensoren, die bei der Objekterkennung eingesetzt werden können, können hier verwendet werden und entsprechend sensorspezifische Daten erfassen und als Rohdaten 12 bereitstellen. In Stream II 23 werden die an dem Sensor 11 zur Erfassung der Daten 12 eingestellten Sensorparameter 15, wie durch Pfeil 2 angedeutet, in dem Schritt 201 bereitgestellt.

Wie durch Pfeil 1-1 angedeutet, werden die sensorisch erfassten Daten 12 als Rohdaten 12 von dem Objekterkennungsalgorithmus 20 in einem Schritt 202 verarbeitet, um in den erfassten Daten 12 mindestens ein Objekt zu erkennen und ggf. auch zu lokalisieren. Von dem Objekterkennungsalgorithmus 20 wird ein Ergebnis 21 ausgegeben, das mindestens ein erkanntes Objekt und mindestens einen dem erkannten Objekt zugewiesenen Übereinstimmungswert, in der Regel formuliert als Wahrscheinlichkeitswert, bspw. als Overlap oder Konfidenz umfasst. Parallel dazu werden in Schritt 202, wie durch Pfeil 2-1 angedeutet, die eingestellten Sensorparameter 15, die bei Erfassung der Daten 12 an dem Sensor 11 eingestellt waren, bereitgestellt. Je nach verwendetem Sensor bzw. je nach verwendeten Sensoren werden dabei sensorspezifische und für die Erfassung der Daten 12 relevante Sensorparameter bereitgestellt. Die so bereitgestellten Sensorparameter 15 und das bereitgestellte Ergebnis 21 werden dann dem maschinellen Lernalgorithmus übergeben.

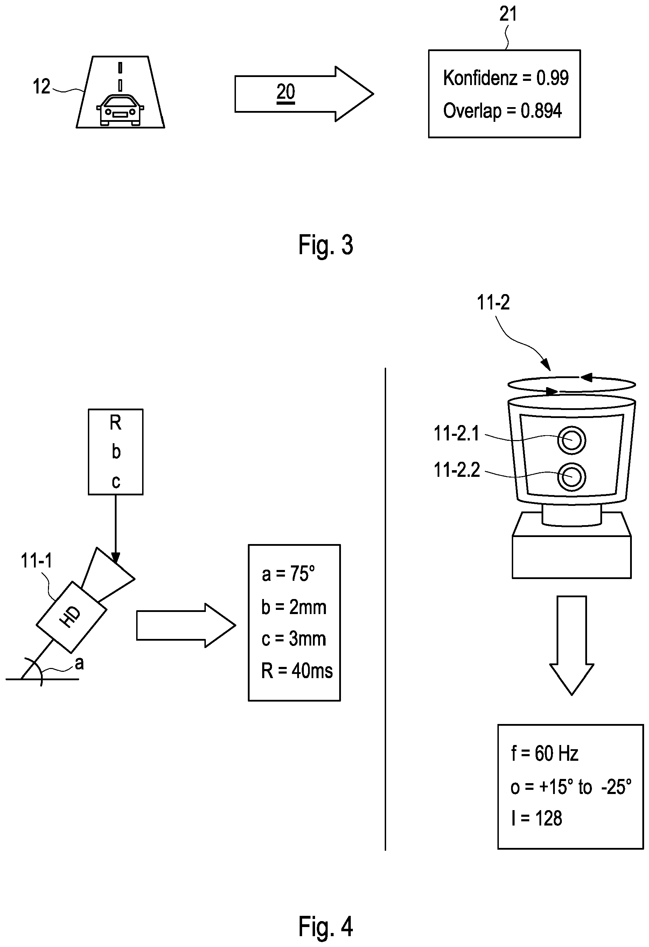

Figur 3 stellt in schematischer Darstellung von Sensoren, bspw. einer Kamera und einem LiDAR-Sensor, erfasste Daten 12 und deren Auswertung nach Verarbeitung von dem Objekterkennungsalgorithmus 20 gemäß einer anderen Ausführungsform des erfindungsgemäßen Verfahrens dar. Die von den jeweiligen Sensoren erfassten Daten 12 werden von dem Objekterkennungsalgorithmus 20 gemeinsam verarbeitet, um das Ergebnis 21 zu erhalten. Das Ergebnis 21 umfasst dabei zwei Übereinstimmungswerte, nämlich einen Overlap und eine Konfidenz. Für das von dem Objekterkennungsalgorithmus 20 erkannte Auto wird dabei eine Konfidenz von 0,99 bzw. 99% und ein Overlap von 0,894 festgestellt bzw. erzielt. Ausgehend von der Konfidenz, dem Overlap und den für die Erfassung der Sensordaten eingestellten Sensorparameter der jeweiligen Sensoren, hier der Kamera und des LiDAR-Sensors werden in Folge von dem maschinellen Lernalgorithmus die Sensorparameter der jeweiligen Sensoren jeweilig ggf. angepasst, modifiziert, d.h. geändert und so sukzessive optimiert.

Figur 4 zeigt in schematischer Darstellung mögliche Sensorparameter von bei der Objekterkennung verwendbarer Sensoren 11. Auf der linken Seite sind beispielhaft Sensorparameter einer bei der Objekterkennung verwendbaren Kamera 11-1, insbesondere einer HD-Kamera, gezeigt. Die Sensorparameter umfassen dabei bspw. einen Beleuchtungswinkel a, eine Linsenposition b, eine Abdeckung c und eine Wiederholungsrate R. Jedem dieser Sensorparameter ist ein jeweiliger Sensorparameterbereich zugeordnet, innerhalb dessen der jeweilige Sensorparameter variiert werden kann. Auf der rechten Seite sind beispielhaft Sensorparameter eines bei der Objekterkennung verwendbaren LiDAR-Sensors 11-2 dargestellt, wobei diese hier bspw. eine Drehfrequenz f, einen Öffnungswinkel o und eine Anzahl von scanbaren Schichten I umfassen. Auch jedem dieser Sensorparameter ist ein jeweiliger Sensorparameterbereich zugeordnet, innerhalb dessen der jeweilige Sensorparameter variiert werden kann. Der LiDAR-Sensor 11-2 weist einen Laser-Emitter 11-2.1 und einen Laser-Receiver 11-2.2 auf.

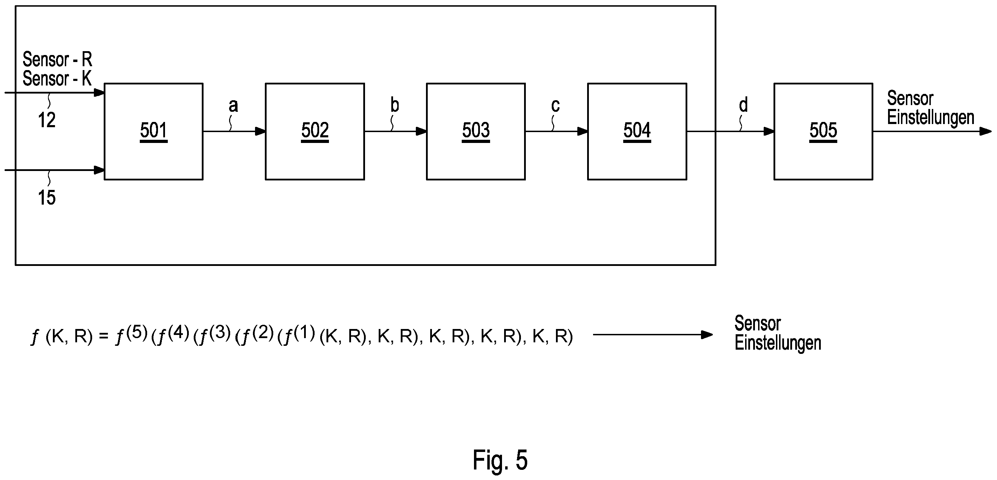

Figur 5 zeigt ein Blockdiagramm zur Illustration einer weiteren Ausführungsform des erfindungsgemäßen Verfahrens. Gemäß einer Ausgestaltung wird das erfindungsgemäße Verfahren bzw. die davon umfassten Schritte a. bis d. durch eine Anzahl $i$ von ineinander verschachtelten Funktionen $f^{(i)}$, die eine entsprechende Anzahl $i$ von Verschachtelungsschalen bilden, wobei $i$ eine natürliche Zahl, hier 5, ist, realisiert. Die ineinander verschachtelten Funktionen bilden eine Funktion $f(K,R)$. Dabei werden die eingestellten Sensorparameter 15 des mindestens einen Sensors $K$, $R$ und die jeweilig mit dem mindestens einen Sensor mit den eingestellten Sensorparametern sensorisch erfassten Daten 12 von einer innersten Funktion $f^{(1)}(x, K, R)$ der verschachtelten Funktionen, dargestellt in Verschachtelungsebene 501, bereitgestellt. Diese werden dann, wie durch Pfeil a angedeutet, von einer die innerste der verschachtelten Funktionen direkt umhüllenden und den Objekterkennungsalgorithmus ausführenden Funktion $f^{(2)}(y, K, R)$ der verschachtelten Funktionen in einer Verschachtelungsebene 502 weiterverarbeitet und, wie durch Pfeil b angedeutet, von einer die den Objekterkennungsalgorithmus ausführende Funktion direkt umhüllenden und die Bewertungsfunktion ausführenden Funktion $f^{(3)}(z, K, R)$ der verschachtelten Funktionen in einer Verschachtelungsebene 503 weiterverarbeitet. Dabei wird ein Ergebnis bereitstellt. Das Ergebnis wird dann, wie durch Pfeil c angedeutet, zusammen mit den eingestellten Sensorparameter von einer die die Bewertungsfunktion ausführende Funktion direkt umhüllenden und den maschinellen Lernalgorithmus ausführenden Funktion $f^{(4)}(v, K, R)$ der verschachtelten Funktionen in einer Verschachtelungsebene 504 weiterverarbeitet. Die daraus resultierenden einzustellenden Sensorparameter werden letztlich, wie durch Pfeil d angedeutet, durch eine äußerste Funktion $f^{(5)}(w, K, R)$ der verschachtelten Funktionen in einer Verschachtelungsebene 505 ausgegeben. Dabei sind v, w, x, y, z jeweilige Funktionsvariablen. Durch die Verschachtelung lässt sich das Verfahren bzw. die davon umfassten Schritte a. bis d. durch die Funktion $f$ für beispielsweise zwei Sensoren $K$, $R$ wie folgt darstellen:

$$f(K,R) = f^{(5)}(f^{(4)}(f^{(3)}(f^{(2)}(f^{(1)}(K,R),K,R),K,R)K,R)K,R)$$

wobei $f(K, R)$ letztlich die angepassten, einzustellenden Sensorparameter bzw. Werte für die einzustellenden Sensorparameter der jeweiligen Sensoren angibt oder zumindest die einzustellenden Sensorparameter aus $f(K, R)$ ableitbar sind bzw. hervorgehen. Mit diesen einzustellenden Sensorparametern werden die Schritte a. bis d. dann erneut durchlaufen. Die Schritte a. bis d. werden so oft wiederholt bzw. $f(K, R)$ wird so oft angewandt bis der jeweilige dem mindestens einen erkannten Objekt zugewiesene Übereinstimmungswert innerhalb mindestens eines der jeweiligen Sensorparameterbereiche ein Maximum einnimmt.

Bezugszeichenliste

| 1 | Pfeil |
|---|---|
| 1-1 | Pfeil |
| 2-1 | Pfeil |
| 2 | Pfeil |
| 3 | Pfeil |
| 4 | Pfeil |
| 5 | Pfeil |
| 11 | Sensor |
| 11-1 | Kamera, HD-Kamera |
| 11-2 | LiDAR-Sensor |
| 11-2.1 | Laser-Emitter |
| 11-2.2 | Laser-Receiver |
| 12 | Daten |
| 13 | Objekt, Kraftfahrzeug, PkW |
| 14 | Straßenabschnitt |
| 15 | Sensorparameter |
| 16 | einzustellende Sensorparameter |
| 20 | Objekterkennungsalgorithmus |
| 21 | Ergebnis |
| 22 | Stream I |
| 23 | Stream II |
| 201 | Schritt |

| 202 | Schritt |
| 30 | maschineller Lernalgorithmus |
| 501 | Verschachtelungsebene |
| 502 | Verschachtelungsebene |
| 503 | Verschachtelungsebene |
| 504 | Verschachtelungsebene |
| 505 | Verschachtelungsebene |
| a | Pfeil |
| b | Pfeil |
| c | Pfeil |
| d | Pfeil |

**Patentansprüche**

1. Verfahren zum Anpassen von einzustellenden Sensorparametern von zwei Sensoren (11) bei Verwendung der zwei Sensoren (11) in funktionsfähiger Verbindung mit einem Objekterkennungsalgorithmus (20) bei einer Objekterkennung, wobei die Sensoren ausgewählt sind aus der Gruppe, die umfasst: Kamera, LiDAR-Sensor, Radar-Sensor, Ultraschall-Sensor, Infrarot-Sensor, Sonar-Sensor, bei dem

    a. die einzustellenden Sensorparameter (16) an den zwei Sensoren (11) eingestellt werden,
    b. die zwei Sensoren (11) mit den eingestellten Sensorparametern (15) aktiviert werden, und die zwei Sensoren (11) Daten (12) sensorisch erfassen und dem Objekterkennungsalgorithmus (20) bereitstellen,
    c. der Objekterkennungsalgorithmus (20) ein Ergebnis (21), umfassend mindestens ein erkanntes Objekt (13) mit einem dem erkannten Objekt zugewiesenen Übereinstimmungswert, ermittelt und einem maschinellen Lernalgorithmus (30), der als Reinforcement Learning Agent realisiert wird, bereitstellt,
    d. der maschinelle Lernalgorithmus (30), dem das Ergebnis (21) und die eingestellten Sensorparameter (15), die zur Erfassung der aktuell sensorisch erfassten Daten (12) an den zwei Sensoren (11) eingestellt sind, bereitgestellt werden, die jeweiligen Sensorparameter der zwei Sensoren (11) innerhalb eines jeweiligen Sensorparameterbereichs variiert und die jeweiligen variierten Sensorparamater als einzustellende Sensorparameter (16) für die zwei Sensoren (11) bereitstellt,
    e. die Schritte a. bis d. iterativ wiederholt werden bis der jeweilige dem mindestens einen erkannten Objekt (13) zugewiesene Übereinstimmungswert innerhalb mindestens eines der jeweiligen Sensorparameterbereiche ein Maximum einnimmt.

2. Verfahren nach Anspruch 1, bei dem der Reinforcement Learning Agent (30) als bestärkend lernender Agent selbständig eine Strategie erlernt, um den jeweiligen dem mindestens einen erkannten Objekt (13) zugewiesenen Übereinstimmungswert zu maximieren.

3. Verfahren nach Anspruch 1 oder 2, bei dem die zwei Sensoren (11) ausgewählt werden aus der Gruppe mindestens umfassend: Kamera (11-1), LiDAR-Sensor (11-2).

4. Verfahren nach Anspruch 3, bei dem die einzustellenden Sensorparameter (16), wenn einer der zwei Sensoren (11) eine Kamera (11-1) ist, für die Kamera (11-1) ausgewählt werden aus einer Gruppe von variierbaren Kameraparametern, insbesondere Kameraposition, Blendenöffnung, Beleuchtungswinkel, Scharfeinstellung, Aufnahmewinkel, Anzahl von Pixeln in einer Pixelwolke, Aufnahmefrequenz und/oder bei dem die einzustellenden Sensorparameter (16), wenn einer der zwei Sensoren (11) ein LiDAR-Sensor (11-2) ist, für den LiDAR-Sensor (11-2) ausgewählt werden aus einer Gruppe von variierbaren LiDAR-Parametern.

5. Verfahren nach einem der voranstehenden Ansprüche, bei dem der Objekterkennungsalgorithmus (20) mit einer Bewertungsfunktion in funktionaler Verbindung steht, insbesondere die Bewertungsfunktion umfasst, wobei die Bewertungsfunktion dazu ausgebildet ist, den jeweiligen dem mindestens einen erkannten Objekt (13) zugewiesenen Übereinstimmungswert zu bestimmen.

6. Verfahren nach einem der Ansprüche 1 bis 4, das durch mehrere ineinander verschachtelte Funktionen realisiert wird, wobei die eingestellten Sensorparameter (15) der zwei Sensoren (11) und die jeweilig mit den zwei Sensoren (11) mit den eingestellten Sensorparametern (15) sensorisch erfassten Daten (12) von einer innersten Funktion der verschachtelten Funktionen bereitgestellt werden, dann von einer die innerste der verschachtelten Funktionen direkt umhüllenden und den Objekterkennungsalgorithmus (20) ausführenden Funktion der verschachtelten Funktionen weiterverarbeitet werden, dann von einer die den Objekterkennungsalgorithmus (20) ausführende Funktion direkt umhüllenden und die Bewertungsfunktion ausführenden Funktion der verschachtelten Funktionen weiterverarbeitet werden, dann von einer die die Bewertungsfunktion ausführende Funktion direkt umhüllenden und den maschinellen Lernalgorithmus (30) ausführenden Funktion der verschachtelten Funktionen weiterverarbeitet werden, und die einzustellenden Sensorparameter (16) durch eine äußerste Funktion der verschachtelten Funktionen ausgegeben werden.

7. Verfahren nach einem der voranstehenden Ansprüche, bei dem als Objekterkennungsalgorithmus (20) ein Deep Learning Algorithmus verwendet wird.

8. System, mindestens umfassend ein computerlesbares Medium und zwei Sensoren (11), wobei die Sensoren ausgewählt sind aus der Gruppe, die umfasst: Kamera, LiDAR-Sensor, Radar-Sensor, Ultraschall-Sensor, Infrarot-Sensor, Sonar-Sensor, wobei das computerlesbare Medium mit den zwei Sensoren (11) in funktionaler Verbindung steht und ein Computerprogramm mit Programmcodes umfasst, die bei Laden und Ausführen des Computerprogramms auf einer Computereinheit, die in funktionaler Verbindung mit den zwei Sensoren (11) steht, dazu ausgebildet sind,

A. an den zwei Sensoren (11) einzustellende Sensorparameter (16) einzustellen, und die zwei Sensoren (11) mit den eingestellten Sensorparametern (15) zu aktivieren,
B. die mit den zwei Sensoren (11) sensorisch erfassten Daten (12) einem Objekterkennungsalgorithmus (20) bereitzustellen,
C. mit dem Objekterkennungsalgorithmus (20) ein Ergebnis (21), umfassend mindestens ein erkanntes Objekt (13) mit einem dem erkannten Objekt zugewiesenen Übereinstimmungswert, zu ermitteln und einem maschinellen Lernalgorithmus (30), der als Reinforcement Learning Agent realisiert ist, bereitzustellen,
D. mit dem maschinelle Lernalgorithmus (30), dem das Ergebnis (21) und die eingestellten Sensorparameter (15), die zur Erfassung der aktuell sensorisch erfassten Daten (12) an dem Sensor (11) eingestellt sind, bereitgestellt werden, die jeweiligen Sensorparameter der zwei Sensoren (11) innerhalb eines jeweiligen Sensorparameterbereichs zu variieren und die jeweiligen variierten Sensorparamater als einzustellende Sensorparameter (16) für die zwei Sensoren (11) bereitzustellen,
E. die Schritte A. bis D. iterativ zu wiederholen bis der jeweilige dem mindestens einen erkannten Objekt (13) zugewiesene Übereinstimmungswert innerhalb mindestens eines der jeweiligen Sensorparameterbereiche ein Maximum einnimmt.

9. System nach Anspruch 8, bei dem der Reinforcement Learning Agent (30) als bestärkend lernender Agent dazu ausgebildet ist, selbständig eine Strategie zu erlernen, um den jeweiligen dem mindestens einen erkannten Objekt (13) zugewiesenen Übereinstimmungswert zu maximieren.

10. System nach Anspruch 8 oder 9, bei dem der Objekterkennungsalgorithmus (20) mit einer Bewertungsfunktion in funktionaler Verbindung steht, insbesondere die Bewertungsfunktion umfasst, wobei die Bewertungsfunktion dazu ausgebildet ist, den jeweiligen dem mindestens einen erkannten Objekt (13) zugewiesenen Übereinstimmungswert zu bestimmen.

11. System nach einem der Ansprüche 8 oder 9, wobei die Programmcodes dazu ausgebildet sind, mehrere ineinander verschachtelte Funktionen durchzuführen, wobei die eingestellten Sensorparameter (15) der zwei Sensoren (11) und die jeweilig mit den zwei Sensoren (11) mit den eingestellten Sensorparametern (15) sensorisch erfassten Daten (12) von einer innersten Funktion der verschachtelten Funktionen bereitgestellt werden, dann von einer die innerste der verschachtelten Funktionen direkt umhüllenden und den Objekterkennungsalgorithmus (20) ausführenden Funktion der verschachtelten Funktionen weiterverarbeitet werden, dann von einer die den Objekterkennungsalgorithmus (20) ausführende Funktion direkt umhüllenden und die Bewertungsfunktion ausführenden Funktion der verschachtelten Funktionen weiterverarbeitet werden, dann von einer die die Bewertungsfunktion ausführende Funktion direkt umhüllenden und den maschinellen Lernalgorithmus (30) Funktion der verschachtelten Funktionen weiterverarbeitet werden, und die einzustellenden Sensorparameter (16) durch eine äußerste Funktion der verschachtelten Funktionen ausgegeben werden.

12. System nach einem der Ansprüche 8 bis 11, bei dem der Objekterkennungsalgorithmus (20) ein Deep Learning Algorithmus ist.

**Claims**

1. A method for adjusting sensor parameters to be set for two sensors (11) when using the two sensors (11) in functional connection with an object recognition algorithm (20) in an object recognition, in which the sensors are selected from the group comprising: camera, LiDAR sensor, radar sensor, ultrasonic sensor, infrared sensor, sonar sensor, in which

> a. the sensor parameters (16) to be set are set on the two sensors (11),
> b. the two sensors (11) are activated with the set sensor parameters (15), and the two sensors (11) capture data (12) sensorily and provide it to the object recognition algorithm (20),
> c. the object recognition algorithm (20) determines a result (21), comprising at least one recognized object (13), with a match value assigned to the recognized object, and provides it to a machine learning algorithm (30) realized as a reinforcement learning agent,
> d. the machine learning algorithm (30), to which are provided the result (21) and the set sensor parameters (15), which are set for capturing at the two sensors (11) the data (12) currently being sensorily captured, varies the respective sensor parameters of the two sensors (11) within a respective sensor parameter range and provides for the two sensors (11) the respective varied sensor parameters as sensor parameters (16) to be set,
> e. the steps a. to d. are iteratively repeated until the respective match value assigned to the at least one recognized object (13) reaches a maximum within at least one of the respective sensor parameter ranges.

2. The method according to claim 1, in which the reinforcement learning agent (30) independently learns a strategy as a reinforcement learning agent to maximize the respective match value assigned to the at least one recognized object (13).

3. The method according to claim 1 or 2, in which the two sensors (11) are selected from the group comprising at least: camera (11-1), LiDAR sensor (11-2).

4. The method according to claim 3, in which the sensor parameters (16) to be set, when one of the two sensors (11) is a camera (11-1), are selected for the camera (11-1) from a group of variable camera parameters, in particular camera position, aperture, illumination angle, focusing, recording angle, number of pixels in a pixel cloud, recording frequency and/or wherein the sensor parameters (16) to be set, when one of the two sensors (11) is a LiDAR sensor (11-2), are selected for the LiDAR sensor (11-2) from a group of variable LiDAR parameters.

5. The method according to any of the preceding claims, in which the object recognition algorithm (20) is functionally connected to an evaluation function, in particular comprises the evaluation function, wherein the evaluation function is designed to determine the respective match value assigned to the at least one recognized object (13).

6. The method according to any of claims 1 to 4, which is realized by a plurality of nested functions, wherein the set sensor parameters (15) of the two sensors (11) and the data (12) respectively sensorily captured by the two sensors (11) with the set sensor parameters (15) are provided by an innermost function of the nested functions, then are further processed by a function of the nested functions, which function directly envelops the innermost of the nested functions and executes the object recognition algorithm (20), then are further processed by a function of the nested functions, which function directly envelops the function executing the object recognition algorithm (20) and executes the evaluation function, then are further processed by a function of the nested functions, which function directly envelopes the function executing the evaluation function and executes the machine learning algorithm, and the sensor parameters to be set (16) are output by an outermost function of the nested functions.

7. The method according to any of the preceding claims, in which a deep learning algorithm is used as the object recognition algorithm (20).

8. A system comprising at least one computer-readable medium and two sensors (11), wherein the sensors are selected from the group comprising: camera, LiDAR sensor, radar sensor, ultrasonic sensor, infrared sensor, sonar sensor, wherein the computer-readable medium is in functional connection with the two sensors (11) and comprises a computer program with program codes which, when the computer program is loaded and executed on a computer unit which is in functional connection with the two sensors (11), are designed to

> A. set, at the two sensors (11), sensor parameters (16) to be set, and to activate the two sensors (11) with the set sensor parameters (15),
> B. provide the data (12) captured by the two sensors (11) to an object recognition algorithm (20),

C. determine with the object recognition algorithm (20) a result (21) comprising at least one recognized object (13) with a match value assigned to the recognized object, and provide the result (21) to a machine learning algorithm (30) realized as a reinforcement learning agent,

D. vary the respective sensor parameters of the two sensors (11) within a respective sensor parameter range and provide for the two sensors (11) the respective varied sensor parameters as sensor parameters (16) to be set, using the machine learning algorithm (30), to which are provided the result (21) and the set sensor parameters (15) which are set for capturing at the two sensors (11) the data (12) currently being sensorily captured.

E. iteratively repeat steps A. to D. until the respective match value assigned to the at least one detected object (13) reaches a maximum within at least one of the respective sensor parameter ranges.

9. The system according to claim 8, in which the reinforcement learning agent (30) is designed as a reinforcement learning agent to independently learn a strategy to maximize the respective match value assigned to the at least one recognized object (13).

10. The system according claim 8 or 9, in which the object recognition algorithm (20) is functionally connected to an evaluation function, in particular comprises the evaluation function, wherein the evaluation function is designed to determine the respective match value assigned to the at least one recognized object (13).

11. The system according to any of claims 8 or 9, wherein the program codes are designed to perform a plurality of nested functions, wherein the set sensor parameters (15) of the two sensors (11) and the data (12) respectively sensorily captured by the two sensors (11) with the set sensor parameters (15) are provided by an innermost function of the nested functions, then are further processed by a function of the nested functions, which function directly envelops the innermost of the nested functions and executes the object recognition algorithm (20), then are further processed by a function of the nested functions, which function directly envelops the function executing the object recognition algorithm (20) and executes the evaluation function, then are further processed by a function of the nested functions, which function directly envelopes the function executing the evaluation function and executes the machine learning algorithm, and the sensor parameters to be set (16) are output by an outermost function of the nested functions.

12. The system according to one of claims 8 to 11, in which the object recognition algorithm (20) is a deep learning algorithm.

**Revendications**

1. Procédé d'optimisation des paramètres à ajuster de deux capteurs (11) lorsque les deux capteurs (11) en liaison fonctionnelle avec un algorithme de détection d'objets (20) sont utilisés lors d'une détection d'objet, les capteurs étant choisis dans le groupe comprenant une caméra, un capteur LiDAR, un capteur radar, un capteur à ultrasons, un capteur infrarouge, un capteur sonar,

    a. les paramètres à ajuster (16) étant ajustés au niveau des deux capteurs (11),
    b. les deux capteurs (11) aux paramètres (15) ajustés étant activés et les deux capteurs (11) détectant des données (12) par captage et les transmettant à l'algorithme de détection d'objets (20),
    c. l'algorithme de détection d'objets (20) déterminant un résultat (21), comprenant au moins un objet (13) détecté présentant une valeur de correspondance attribuée à l'objet détecté, et le transmettant à un algorithme d'apprentissage automatique (30), réalisé en tant que Reinforcement Learning Agent,
    d. l'algorithme d'apprentissage automatique (30), qui reçoit le résultat (21) et les paramètres (15) ajustés, qui sont ajustés au niveau des deux capteurs (11) afin que ceux-ci détectent les données (12) actuelles détectées par captage, faisant varier les paramètres respectifs des deux capteurs (11) dans une plage de paramètres respective et fournissant les paramètres respectifs variés en tant que paramètres à ajuster (16) pour les deux capteurs (11),
    e. les étapes « a » à « d » se répétant de façon itérative jusqu'à ce que la valeur de correspondance respective attribuée à l'au moins un objet (13) détecté atteigne son maximum dans au moins une des plages de paramètres respectives.

2. Procédé selon la revendication 1, dans lequel le Reinforcement Learning Agent (30) comme agent d'apprentissage par renforcement apprend de manière autonome une stratégie visant à maximiser la valeur de correspondance respective attribuée à l'au moins un objet (13) détecté.

3. Procédé selon la revendication 1 ou 2, les deux capteurs (11) étant choisis dans le groupe comprenant au moins : une caméra (11-1), un capteur LiDAR (11-2).

4. Procédé selon la revendication 3, dans lequel, si l'un des deux capteurs (11) est une caméra (11-1), les paramètres à ajuster (16) sont choisis pour la caméra (11-1) dans un groupe de paramètres de caméra variables, notamment la position de la caméra, l'ouverture du diaphragme, l'angle d'éclairage, la mise au point, l'angle de prise de vue, le nombre de pixels dans un nuage de pixels, la fréquence de prises de vue, et/ou dans lequel, si l'un des deux capteurs (11) est un capteur LiDAR (11-2), les paramètres à ajuster (16) sont choisis pour le capteur LiDAR (11-2) dans un groupe de paramètres LiDAR variables.

5. Procédé selon l'une des revendications précédentes, dans lequel l'algorithme de détection d'objets (20) est en liaison fonctionnelle avec une fonction d'évaluation, en particulier comprend la fonction d'évaluation, la fonction d'évaluation étant conçue pour déterminer la valeur de correspondance respective attribuée à l'au moins un objet (13) détecté.

6. Procédé selon l'une des revendications 1 à 4, réalisé par plusieurs fonctions imbriquées les unes dans les autres, les paramètres (15) ajustés des deux capteurs (11) et les données (12) respectivement détectées par captage par les deux capteurs (11) aux paramètres (15) ajustés étant fournis par la plus interne des fonctions imbriquées, puis traités par une autre fonction des fonctions imbriquées, qui englobe directement la plus interne des fonctions imbriquées et exécute l'algorithme de détection d'objets (20), puis traités par une autre fonction des fonctions imbriquées, qui englobe directement la fonction exécutant l'algorithme de détection d'objets (20) et exécute la fonction d'évaluation, puis traités par une autre fonction des fonctions imbriquées, qui englobe directement la fonction exécutant la fonction d'évaluation et exécute l'algorithme d'apprentissage automatique (30), et les paramètres à ajuster (16) étant délivrés par la plus externe de ces fonctions imbriquées.

7. Procédé selon l'une des revendications précédentes, dans lequel l'algorithme de détection d'objets (20) est un algorithme Deep Learning.

8. Système comprenant au moins un support lisible par ordinateur et deux capteurs (11), les capteurs étant choisis dans le groupe comprenant une caméra, un capteur LiDAR, un capteur radar, un capteur à ultrasons, un capteur infrarouge, un capteur sonar, le support lisible par ordinateur étant en liaison fonctionnelle avec les deux capteurs (11) et comprenant un programme informatique, dont les codes sont conçus de manière à ce que, lors du chargement et de l'exécution du programme informatique sur une unité informatique en liaison fonctionnelle avec les deux capteurs (11) :

   A. les paramètres à ajuster (16) soient ajustés au niveau des deux capteurs (11) et les deux capteurs (11) aux paramètres (15) ajustés soient activés,
   B. les données (12) détectées par captage par les deux capteurs (11) soient fournies à un algorithme de détection d'objets (20),
   C. l'algorithme de détection d'objets (20) détermine un résultat (21), comprenant au moins un objet (13) détecté présentant une valeur de correspondance attribuée à l'objet détecté, et le transmette à un algorithme d'apprentissage automatique (30), réalisé en tant que Reinforcement Learning Agent,
   D. l'algorithme d'apprentissage automatique (30) recevant le résultat (21) et les paramètres (15) ajustés, qui sont ajustés pour que le capteur (11) détecte les données (12) actuelles détectées par captage, fasse varier les paramètres respectifs des deux capteurs (11) dans une plage de paramètres respective et fournisse les paramètres respectifs variés en tant que paramètres à ajuster (16) pour les deux capteurs (11),
   E. les étapes A. à D. se répètent de manière itérative jusqu'à ce que la valeur de correspondance respective attribuée à l'au moins un objet (13) détecté atteigne son maximum dans au moins une des plages de paramètres respectives.

9. Système selon la revendication 8, dans lequel le Reinforcement Learning Agent (30) comme agent d'apprentissage par renforcement est conçu pour apprendre de manière autonome une stratégie visant à maximiser la valeur de correspondance respective attribuée à l'au moins un objet (13) détecté.

10. Système selon la revendication 8 ou 9, dans lequel l'algorithme de détection d'objets (20) est en liaison fonctionnelle avec une fonction d'évaluation, en particulier comprend la fonction d'évaluation, la fonction d'évaluation étant conçue pour déterminer la valeur de correspondance respective attribuée à l'au moins un objet (13) détecté.

11. Système selon l'une des revendications 8 ou 9, dans lequel les codes de programme sont conçus pour exécuter plusieurs fonctions imbriquées les unes dans les autres, les paramètres (15) ajustés des deux capteurs (11) et les données (12) détectées par captage par les deux capteurs (11) aux paramètres (15) ajustés étant fournis par la plus interne de ces fonctions imbriquées, puis traités par une autre fonction des fonctions imbriquées, qui englobe directement la plus interne des fonctions imbriquées et exécute l'algorithme de détection d'objets (20), puis traités par une autre fonction des fonctions imbriquées, qui englobe directement la fonction exécutant l'algorithme de détection d'objets (20) et exécute la fonction d'évaluation, puis traités par une autre fonction des fonctions imbriquées, qui englobe directement la fonction exécutant la fonction d'évaluation et exécute l'algorithme d'apprentissage automatique (30), et les paramètres à ajuster (16) étant délivrés par la plus externe de ces fonctions imbriquées.

12. Système selon l'une des revendications 8 à 11, dans lequel l'algorithme de détection d'objets (20) est un algorithme Deep Learning.

Fig. 1

Fig. 2

EP 3 945 452 B1

21

Konfidenz = 0.99

Overlap = 0.894

12

20

Fig. 3

11-2

R
b
c

11-1

HD

a

a = 75°

b = 2mm

c = 3mm

R = 40ms

11-2.1

11-2.2

f = 60 Hz

o = +15° to -25°

I = 128

Fig. 4

$$f(K, R) = f^{(5)}(f^{(4)}(f^{(3)}(f^{(2)}(f^{(1)}(K, R), K, R), K, R), K, R), K, R) \longrightarrow \text{Sensor Einstellungen}$$

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018126112 A1